# EUROPÄISCHE PATENTSCHRIFT

(11) **EP 4 377 638 B1**
(45) Veröffentlichungstag und Bekanntmachung des Hinweises auf die Patenterteilung: **10.06.2026**
(21) Anmeldenummer: 22744782.8
(22) Anmeldetag: 26.07.2022
(51) Int. Cl.: G01F 1/58, G01F 15/02, F27D 9/00, B22D 11/055

(54) **VERFAHREN ZUR KOMPENSATION VON DURCH MAGNETISCHE FELDER VERURSACHTEN STÖRGRÖSSEN BEI EINER DURCHFLUSSMESSUNG VON FLÜSSIGKEITEN MITTELS EINES MAGNETISCH-INDUKTIVEM DURCHFLUSSMESSGERÄTES**
METHOD FOR COMPENSATING FOR DISTURBANCES IN A FLOW MEASUREMENT OF LIQUIDS BY MEANS OF A MAGENTIC-INDUCTIVE FLOW METER
PROCÉDÉ DE COMPENSATION DES PERTURBATIONS LORS D'UNE MESURE DE DÉBIT DES LIQUIDES AU MOYEN D'UN DÉBITMÈTRE MAGNÉTO-INDUCTIF

(30) Priorität: 27.07.2021 EP 21188027
(43) Veröffentlichungstag der Anmeldung: 05.06.2024
(73) Patentinhaber: Primetals Technologies Austria GmbH, 4031 Linz (AT)
(72) Erfinder: HARTL, Franz, 4720 Kallham (AT); HUSAKOVIC, Adnan, 4150 Rohrbach (AT); KRUMP, Richard, 4072 Alkoven (AT); TUSHEV, Anton, 91056 Erlangen (DE)
(74) Vertreter: Metals@Linz
(86) Internationale Anmeldenummer: PCT/EP2022/070932
(87) Internationale Veröffentlichungsnummer: WO 2023/006739

(56) Entgegenhaltungen:
- DE-A1- 102009 051 931
- DE-U1- 9 402 925
- US-A1- 2021 164 815
- US-B2- 10 670 437

## Beschreibung

### Gebiet der Technik

Die Erfindung ist auf dem Gebiet der Durchflussmessung von Flüssigen mittels eines magnetisch-induktivem Durchflussmessgerätes.

Die Erfindung geht aus von einem Verfahren zur Kompensation von zumindest einer, durch ein magnetisches Feld verursachten, Störgröße bei einer Durchflussmessung von Flüssigkeiten mittels eines magnetisch-induktivem Durchflussmessgerätes, welches aufgrund der Störgröße eine fehlerhaftes Durchflussmenge liefert. Die Erfindung geht weiters aus von einer Auswerteeinrichtung und von einem elektrischen Lichtbogenofen mit einem Kühlsystem.

### Stand der Technik

Die Messung von Durchflussmengen flüssiger Medien hat bei Industrieanlagen eine hohe Bedeutung. Es gibt unterschiedlichste Methoden der Durchflussmessung. Eine sehr vorteilhafte Durchflussmessung wird mithilfe von magnetisch-induktiven Durchflussmessgeräten durchgeführt. Diese haben den Vorteil, dass dadurch kein Druckabfall in einem Rohrleitungssystem verursachen und der Einbau in einem kurzen geraden Rohrabschnitt möglich **ist.** Das Arbeitsprinzip des magnetisch-induktivem Durchflussmessgerätes basiert auf dem Faraday'schen Gesetz der elektromagnetischen Induktion. Nach diesem Prinzip wird beim Durchgang eines leitfähigen Mediums durch ein Magnetfeld eine Spannung erzeugt, die proportional zur Geschwindigkeit des Mediums, der Dichte des Magnetfeldes und der Länge des Leiters ist. Der Durchflusswert wird anhand der Geschwindigkeit und des Rohrinnendurchmessers ermittelt. Für eine genaue Messung ist ein präzises und reproduzierbares elektromagnetisches Erregerfeld erforderlich.

In einer Umgebung in welcher Störgrößen vorhanden sind, welche dieses elektromagnetische Erregerfeld beeinflussen, kann die Messsignalauswertung gestört werden und die ermittelte Durchflussmessung kann nicht mehr zuverlässig erfolgen.

Eine besondere Aufgabe dieser Durchflussmessungen ist die zuverlässige und genaue Erkennung von Leckagen im Kühlsystem von einem Elektrolichtbogenofen. Leckagen im Kühlsystem bergen ein hohes Gefahrenpotential, da der Kontakt von Kühlwasser mit flüssigem Stahl zu schweren Unfällen führen kann. Durch die hohe Temperatur von flüssigem Stahl kann es zu einer spontanen Verdampfung von Wasser kommen, Dissoziation von Wasser oder eine Gefahr durch entstehenden explosiven Wasserstoff.

Aus diesem Grund befinden sich Durchflussmesser in der Vorlauf- und in der Rücklaufleitung. Der Durchfluss in der Rücklaufleitung muss gleich dem Durchfluss in der Vorlaufleitung sein. Sollte der Durchflussmessung einen Unterschied ergeben liegt entweder eine Leckage vor - welche ein hohes Gefahrenpotential bedeutet - oder die Messung ist mit einem Fehler behaftet.

In der Umgebung von einem Elektrolichtbogenofen sind Störgrößen vorhanden, welche die Durchflussmessung verfälschen.

In der US20100107776A1 oder **in** der US10670437B2 ist ein Verfahren zum Kompensieren von Durchflussstörungen eines magnetischen Durchflussmessers gezeigt.

In der DE102009051931A1 ist ein Verfahren zur Früherkennung von Leckagen für eine flüssigen in einer Kühlvorrichtung zum Kühlen einer technischen Anlage offenbart.

### Zusammenfassung der Erfindung

Die Aufgabe der vorliegenden Erfindung ist es ein Verfahren zur Verfügung zu stellen, welches die verfälschte Durchflussmessung korrigiert.

Die Aufgabe wird gelöst durch ein Verfahren welches eine tatsächliche Durchflussmenge mithilfe der fehlerhaftem Durchflussmenge, sowie eines datenbasierten Modells der Störgröße, welche aufgrund von einem magnetischen Feld auftritt, ermittelt.

Als Eingangsparameter für das datenbasierte Modell dienen charakteristische Einflussparameter der Störgröße.

Das datenbasierte Modell wird beispielsweise anhand von Daten, welche in einem bestimmten Zeitraum erfasst werden, erstellt. Dieser Zeitraum kann beispielsweise zumindest einige Stunden, zumindest einige Tage oder eine Woche sein. Das Modell kann dann laufend anhand von erfassten Daten online optimiert werden. Das datenbasierte Modell wird bevorzugt durch die Methode der Support Vector Regression erstellt.

Eine bevorzugte Ausführungsform sieht vor, dass mithilfe der Durchflussmessung eine Durchflussmenge von Kühlmittel, bevorzugt Kühlwasser, bei einem elektrischen Lichtbogenofen bestimmt wird. Die charakteristischen Einflussparameter sind zumindest ein Elektrodenstrom, eine Primärspannung, eine Sekundärspannung, eine gesamte harmonische Verzerrung und/oder eine Gesamtleistung des elektrischen Lichtbogenofens. Für die Anwendung bei einem elektrischen Lichtbogenofen kann ein Modell individuell für einen bestimmten Lichtbogenofen erstellt werden. Es ist aber auch denkbar, dass ein generalisiertes Modell zum Einsatz kommt, welches für jeden beliebigen elektrischen Lichtbogenofen zum Einsatz kommen kann. Im Anwendungsfall des generalisierten Modells werden Tree Based Models (xGBoost), lineare Regression Modelle, Support Vector Regression (SVR) Modelle und / oder neuronale Netze verwendet.

Eine vorteilhafte Ausführung sieht vor, dass zusätzliche charakteristische Einflussparameter eine aktuelle Betriebsphase des elektrischen Lichtbogenofens, bevorzugt eine Zündphase, eine Bohrphase, eine Hauptschmelzphase und / oder eine Flachbadphase ist.

Die Betriebsphase ist beispielsweise der Elektrodenregelung aufgrund der aktuellen eingebrachten Energie bzw. der harmonischen Verzerrungen der Stromsignale bekannt. Diese Information kann an das Modell weitergegeben werden. Die Berücksichtigung der Betriebsphasen werden beispielsweise ab einer bestimmten Gesamtleistung - bevorzugt ab einer Gesamtleistung von größer als 25% - des elektrischen Lichtbogenofens aktiviert.

Eine zweckmäßige Ausführung sieht vor, dass ein charakteristischer Einflussparameter eine Temperatur der Flüssigkeit ist.

Die Aufgabe wird auch gelöst durch eine Auswerteeinrichtung umfassend Eingänge für charakteristische Einflussparameter und ein Computerprogramm durch Durchführung des oben beschriebenen Verfahrens und einen Ausgang zur Übermittlung einer tatsächliche Durchflussmenge.

Die Aufgabe wird weiters gelöst durch einen elektrischen Lichtbogenofen umfassend ein Kühlsystem mit zumindest einem Zufluss und zumindest einem Abfluss, wobei an dem zumindest einen Zufluss und dem zumindest einen Abfluss, jeweils ein magnetisch-induktives Durchflussmessgerät zur Bestimmung der Durchflussmenge angebracht ist. Die jeweils angebrachten magnetisch-induktives Durchflussmessgeräte umfassen jeweils eine zuvor beschriebene Auswerteeinrichtung, wobei jeweils Ausgänge der Auswerteeinrichtung mit einer Vergleichsvorrichtung verbunden sind. Die Vergleichsvorrichtung ist derart ausgestaltet, dass eine Differenz von tatsächlicher Durchflussmenge des Zuflusses und tatsächlicher Durchflussmenge des Abflusses identifiziert wird.

Kurze Beschreibung der Zeichnungen
- Fig. 1: eine schematische Elektrodenanordnung für einen elektrischen Lichtbogenofen.
- Fig. 2: ein beispielhafter Verlauf der Harmonischen Frequenzen des Stromverlaufes.
- Fig. 3: eine fehlerhafte Durchflussmessung.
- Fig. 4: elektrischer Lichtbogenofen mit einem Kühlsystem.

### Beschreibung der Ausführungsformen

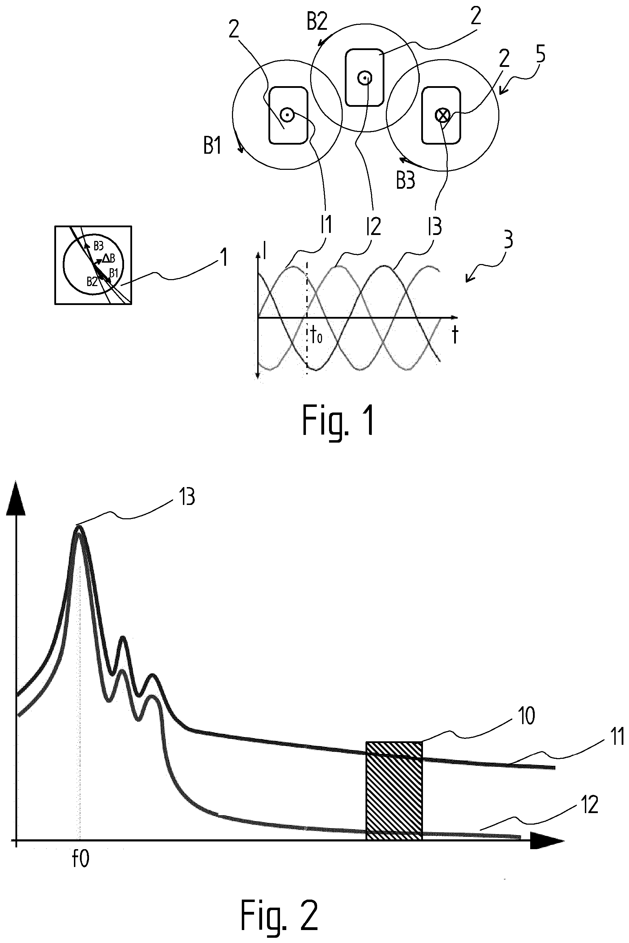

In der Fig. 1 ist schematisch ein Elektrodenanordnung 5 für einen elektrischen Lichtbogenofen dargestellt. Die Elektrodenanordnung 5 besteht aus drei Elektroden 2. Durch die Elektroden 2 fließt ein Strom I1, I2 und I3 und es bilden sich drei magnetische Felder mit jeweils einer magnetischen Flussdichte B1, B2 und B3. Im Diagramm 3 ist der zeitliche Verlauf der Ströme I1, I2 und I3 dargestellt. Im Diagramm 3 ist ein Zeitpunkt t₀ dargestellt. Ein magnetisch-induktivem Durchflussmessgerätes 1, welches sich in der Nähe der Elektrodenanordnung 5 befindet, ist dafür vorgesehen eine Kühlwasser Durchflussmenge zu bestimmen. Die magnetischen Felder der einzelnen Elektroden üben zum Zeitpunkt t₀ entsprechend ihrer magnetischen Flussdichte B1, B2 und B3 ein Störfeld mit der magnetischen Flussdichte ΔB auf das magnetisch-induktivem Durchflussmessgerätes 1 aus. Dieses Störfeld verfälscht die Durchflussmessung des magnetisch-induktivem Durchflussmessgerätes 1. Diese Störfeld ändert sich entsprechend dem veränderlichen Strom I1, I2 und I3 über die Zeit t. Es ist somit keine konstantes Störfeld, sondern ein zeitlich sich veränderliches.

In der Fig. 2 ist ein beispielhafter Verlauf der Harmonischen Frequenzen des Stromverlaufes für unterschiedliche Phasen während des Betriebes mit dem elektrischen Lichtbogenofen gezeigt. Die Frequenz f0 stellt die Frequenz der Grundschwingung dar. In eine Arbeitsfrequenzbereich 10 liegt der Frequenzbereich, in welchem das magnetisch-induktivem Durchflussmessgerätes 1 arbeitet. Ein Frequenzverlauf des Einschmelzvorgangs 11 weist höhere harmonische Anteile im Arbeitsfrequenzbereich 10 auf, als beispielsweise ein Frequenzverlauf für die Flüssigbaderwärmung 12. Es zeigt sich also, dass auch die unterschiedlichen Betriebsphasen einen unterschiedlich großen Einfluss auf Durchflussmessung haben können. Das Problem, dass sich ergibt, hängt von sehr vielen unterschiedlichen Parameter und Betriebszuständen ab.

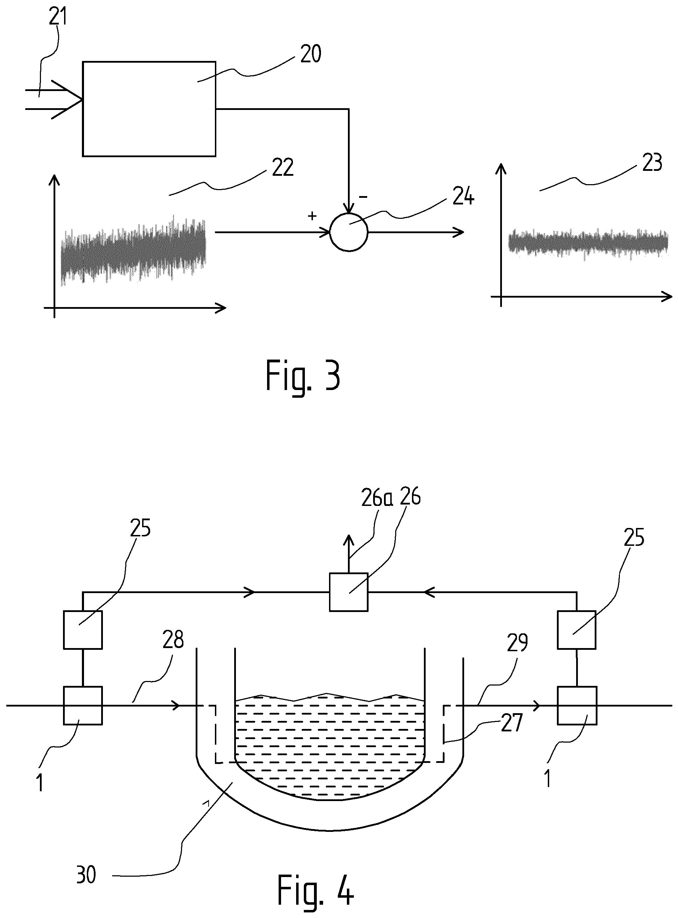

In Fig. 3 ist eine fehlerhafte Durchflussmessung 22 dargestellt. In einem datenbasierten Modell 20, welches verschiedenste Eingangsparameter 21 aufweist, wird die Störgröße ermittelt. Die fehlerhafte Durchflussmessung 22 wird durch die ermittelte Störgröße an einem Subtraktionsglied 24 korrigiert, wodurch die tatsächliche Durchflussmenge 23 ermittelt wird.

In der Fig. 4 ist ein Elektrischer Lichtbogenofen 30 mit einem Kühlsystem 27 schematisch dargestellt. Dieser weist einen Zufluss 28 und einen Abfluss 29 für Kühlmittel auf. Es ist jeweils am Zufluss 28 und am Abfluss 29 ein magnetisch-induktives Durchflussmessgerät 1 angeordnet. Dem magnetisch-induktiven Durchflussmessgeräten 1 ist eine Auswerteeinrichtung 25 nachgeordnet, welche mittels des datenbasierten Modells eine tatsächliche Durchflussmenge bestimmt und jeweils der Vergleichsvorrichtung 26 übermittelt. Die Vergleichsvorrichtung 26 kann aus den übermittelten tatsächlichen Durchflussmengen sofort eine Abweichung des Durchflusses von Zufluss 28 und Abfluss 29 erkennen.

### Bezugszeichenliste

- 1: Durchflussmessgerätes
- 2: Elektroden
- 3: Diagramm
- 5: Elektrodenanordnung
- 10: Arbeitsfrequenzbereich
- 11: Einschmelzvorgangs
- 12: Flüssigbaderwärmung
- 20: datenbasierten Modell
- 21: Eingangsparameter
- 22: fehlerhafte Durchflussmessung
- 23: tatsächliche Durchflussmenge
- 24: Subtraktionsglied
- 25: Auswerteeinrichtung
- 26: Vergleichsvorrichtung
- 26a: Abweichung
- 27: Kühlsystem
- 28: Zufluss
- 29: Abfluss
- 30: Elektrischer Lichtbogenofen
- B1, B2,B3: Magnetische Flussdichte
- ΔB: Störfeld
- t, t₀: Zeit
- I1, I2, I3: Strom
- f0: Frequenz

## Patentansprüche

1. Verfahren zur Kompensation von zumindest einer, durch ein magnetisches Feld verursachten, Störgröße bei einer Durchflussmessung von Flüssigkeiten mittels eines magnetisch-induktiven Durchflussmessgerätes (1), welches aufgrund der Störgröße eine fehlerhafte Durchflussmenge (22) liefert, **dadurch gekennzeichnet, dass** eine tatsächliche Durchflussmenge (23) mithilfe der fehlerhaften Durchflussmenge (22), sowie eines datenbasiertes Modells (20) der Störgröße ermittelt wird, wobei charakteristische Einflussparameter der Störgröße als Eingangsparameter (21) für das datenbasierte Modell (20) verwendet werden.

2. Verfahren zur Kompensation von zumindest einer, durch ein magnetisches Feld verursachten, Störgröße bei einer Durchflussmessung von Flüssigkeiten mittels eines magnetisch-induktiven Durchflussmessgerätes (1) nach Anspruch 1, **dadurch gekennzeichnet, dass** mithilfe der Durchflussmessung eine Durchflussmenge (22) von Kühlmittel, bevorzugt Kühlwasser, bei einem elektrischen Lichtbogenofen (30) bestimmt wird, wobei als charakteristische Einflussparameter zumindest ein Elektrodenstrom, eine Primärspannung, eine Sekundärspannung, eine gesamte harmonische Verzerrung und/oder Gesamtleistung des elektrischen Lichtbogenofens (30) verwendet werden.

3. Verfahren zur Kompensation von zumindest einer, durch ein magnetisches Feld verursachten, Störgröße bei einer Durchflussmessung von Flüssigkeiten mittels eines magnetisch-induktiven Durchflussmessgerätes (1) nach Anspruch 2, **dadurch gekennzeichnet, dass** zusätzliche charakteristische Einflussparameter eine aktuelle Betriebsphase des elektrischen Lichtbogenofens (30), bevorzugt eine Zündphase, eine Bohrphase, eine Hauptschmelzphase und / oder eine Flachbadphase, ist.

4. Verfahren zur Kompensation von zumindest einer, durch ein magnetisches Feld verursachten, Störgröße bei einer Durchflussmessung von Flüssigkeiten mittels eines magnetisch-induktiven Durchflussmessgerätes (1) nach einem der Ansprüche 1-3, **dadurch gekennzeichnet, dass** ein charakteristischer Einflussparameter eine Temperatur der Flüssigkeit ist.

5. Auswerteeinrichtung (25) umfassend Eingänge für charakteristische Einflussparameter und ein Computerprogramm zur Durchführung des Verfahrens nach den Ansprüchen 1 - 4 und einen Ausgang zur Übermittlung einer tatsächliche Durchflussmenge (23).

6. Elektrischer Lichtbogenofen (30) umfassend ein Kühlsystem mit zumindest einem Zufluss (28) und zumindest einem Abfluss (29), wobei an dem zumindest einen Zufluss (28) und dem zumindest einen Abfluss (29), jeweils ein magnetisch-induktives Durchflussmessgerät (1) zur Bestimmung der Durchflussmenge angebracht ist und die jeweils angebrachten magnetisch-induktiven Durchflussmessgeräte (1) jeweils eine Auswerteeinrichtung (25) nach Anspruch 5 umfassen, wobei jeweils Ausgänge der Auswerteeinrichtung mit einer Vergleichsvorrichtung (26) verbunden sind, wobei die Vergleichsvorrichtung (26) derart ausgestaltet ist, dass eine Differenz von tatsächlicher Durchflussmenge des Zuflusses (28) und tatsächlicher Durchflussmenge (23) des Abflusses (29) identifiziert wird.

## Claims

1. Method for compensating for at least one disturbance variable, caused by a magnetic field, in a flow rate measurement of liquids by means of a magnetic-inductive flowmeter (1) that delivers an erroneous flow rate (22) due to the disturbance variable, **characterized in that** an actual flow rate (23) is ascertained using the erroneous flow rate (22) and a data-based model (20) of the disturbance variable,
characteristic influencing parameters of the disturbance variable being used as input parameters (21) for the data-based model (20).

2. Method for compensating for at least one disturbance variable, caused by a magnetic field, in a flow rate measurement of liquids by means of a magnetic-inductive flowmeter (1) according to Claim 1, **characterized in that** the flow rate measurement is used to determine a flow rate (22) of coolant, preferably cooling water, for an electric arc furnace (30), the characteristic influencing parameters used being at least an electrode current, a primary voltage, a secondary voltage, a total harmonic distortion and/or a total power of the electric arc furnace (30).

3. Method for compensating for at least one disturbance variable, caused by a magnetic field, in a flow rate measurement of liquids by means of a magnetic-inductive flowmeter (1) according to Claim 2, **characterized in that** additional characteristic influencing parameters are a present operating phase of the electric arc furnace (30), preferably an ignition phase, a drilling phase, a primary melting phase and/or a flat bath phase.

4. Method for compensating for at least one disturbance variable, caused by a magnetic field, in a flow rate measurement of liquids by means of a magnetic-inductive flowmeter (1) according to one of Claims 1-3, **characterized in that** one characteristic influencing parameter is a temperature of the liquid.

5. Evaluation device (25) comprising inputs for characteristic influencing parameters and a computer program for performing the method according to Claims 1-4 and an output for transmitting an actual flow rate (23).

6. Electric arc furnace (30) comprising a cooling system having at least one supply (28) and at least one drain (29), wherein magnetic-inductive flowmeters (1) for determining the flow rate are installed on the at least one supply (28) and the at least one drain (29) and the installed magnetic-inductive flowmeters (1) each comprise an evaluation device (25) according to Claim 5, outputs of the evaluation devices being connected to a comparison apparatus (26), the comparison apparatus (26) being configured to identify a difference between the actual flow rate of the supply (28) and the actual flow rate (23) of the drain (29).

## Revendications

1. Procédé de compensation d'au moins une entrée perturbatrice due à un champ magnétique lors d'une mesure de débit de liquides au moyen d'un débitmètre magnéto-inductif (1) qui fournit un débit erroné (22) à cause de la entrée perturbatrice, **caractérisé en ce qu'**un débit réel (23) est déterminé à l'aide du débit erroné (22), ainsi que d'un modèle basé sur des données (20) de l'entrée perturbatrice, dans lequel des paramètres d'influence caractéristiques de l'entrée perturbatrice sont utilisés comme paramètres d'entrée (21) pour le modèle basé sur des données (20).

2. Procédé de compensation d'au moins une entrée perturbatrice due à un champ magnétique lors d'une mesure de débit de liquides au moyen d'un débitmètre magnéto-inductif (1) selon la revendication 1, **caractérisé en ce qu'**à l'aide de la mesure de débit, un débit (22) de liquide de refroidissement, de préférence d'eau de refroidissement, est déterminé dans un four à arc électrique (30), au moins un courant d'électrode, une tension primaire, une tension secondaire, une distorsion harmonique totale et/ou une puissance totale du four à arc électrique (30) étant utilisés comme paramètres d'influence caractéristiques.

3. Procédé de compensation d'au moins une entrée perturbatrice due à un champ magnétique lors d'une mesure de débit de liquides au moyen d'un débitmètre magnéto-inductif (1) selon la revendication 2, **caractérisé en ce que** des paramètres d'influence caractéristiques supplémentaires sont une phase de fonctionnement actuelle du four à arc électrique (30), de préférence une phase d'allumage, une phase de forage, une phase de fusion principale et/ou une phase de bain plat.

4. Procédé de compensation d'au moins une entrée perturbatrice due à un champ magnétique lors d'une mesure de débit de liquides au moyen d'un débitmètre magnéto-inductif (1) selon l'une quelconque des revendications 1 à 3, **caractérisé en ce qu'**un paramètre d'influence caractéristique est une température du liquide.

5. Dispositif d'évaluation (25) comprenant des entrées pour des paramètres d'influence caractéristiques et un programme informatique permettant de mettre en œuvre le procédé selon les revendications 1 à 4, et une sortie permettant de transmettre un débit réel (23).

6. Four à arc électrique (30) comprenant un système de refroidissement avec au moins un flux d'entrée (28) et au moins un flux de sortie (29), dans lequel un débitmètre magnéto-inductif (1) est respectivement installé au niveau du au moins un flux d'entrée (28) et au niveau du au moins un flux de sortie (29) pour déterminer les débits, et les débitmètres magnéto-inductifs (1) respectivement installés comprennent chacun un dispositif d'évaluation (25) selon la revendication 5, dans lequel les sorties respectives du dispositif d'évaluation sont reliées à un dispositif de comparaison (26), dans lequel le dispositif de comparaison (26) est conçu de telle sorte qu'une différence entre le débit réel du flux d'entrée (28) et le débit réel (23) du flux de sortie (29) est identifiée.
